# EUROPEAN PATENT SPECIFICATION

(11) **EP 4 189 977 B1**
(45) Date of publication and mention of the grant of the patent: **01.04.2026**
(21) Application number: 21758864.9
(22) Date of filing: 26.07.2021
(51) Int. Cl.: H04W 4/02, H04L 67/52, H04L 67/56, H04W 4/90

(54) **PROVIDING LOCATION DATA TO A FIRST MOBILE COMPUTING DEVICE**
BEREITSTELLUNG VON STANDORTDATEN AN EINE ERSTE MOBILE RECHENVORRICHTUNG
FOURNITURE DE DONNÉES DE LOCALISATION À UN PREMIER DISPOSITIF INFORMATIQUE MOBILE

(30) Priority: 28.07.2020 US 202016940721
(43) Date of publication of application: 07.06.2023
(73) Proprietor: Vonage Business Inc., Holmdel, NJ 07733 (US)
(72) Inventor: CARGILL, David Thomas, London, SW2 3HZ (GB)
(74) Representative: Fulton, David James
(86) International application number: PCT/US2021/043129
(87) International publication number: WO 2022/026361

(56) References cited:
- US-A1- 2009 009 398
- US-A1- 2011 159 862
- US-A1- 2012 157 032
- US-A1- 2014 066 095
- US-A1- 2019 182 720
- US-B2- 8 442 481
- - - -: "Geographic Coordinate Formats", 24 December 2018 (2018-12-24), pages 1 - 1, XP093153712, Retrieved from the Internet <URL:https://web.archive.org/web/20181224211256/https://www.e-education.psu.edu/natureofgeoinfo/c2_p12.html> [retrieved on 20240419]
- ALCATEL: "Alcatel end-to-end Location-based services solution", INTERNET CITATION, 1 September 2005 (2005-09-01), pages 1 - 11, XP002479079, Retrieved from the Internet <URL:http://www.fixedmobileconvergence.net/whitepapers/fmc-alcatel2.pdf> [retrieved on 20050901]
- ANONYMOUS: "What3words - Wikipedia", 22 July 2020 (2020-07-22), pages 1 - 6, XP055847390, Retrieved from the Internet <URL:https://en.wikipedia.org/w/index.php?title=What3words&oldid=968945083> [retrieved on 20211004]

## Description

### BACKGROUND OF THE INVENTION

When an individual places a telephone call to an emergency services telephone number, such as dialing 911 in the United States, the telephony service provider that provides the individual with telephony service typically routes the telephone call to a Public Safety Answering Point (PSAP). The PSAP is a call center operated by a local government. The call is answered by a specially trained 911 dispatcher who is then responsible for dispatching first responders such as police, firemen and/or medical assistance personnel.

When an individual places such an emergency call, it is very helpful for the telephony service provider to know the current location of the calling party. First, it is desirable to connect the emergency call to a PSAP that can provide immediate assistance to the calling party, meaning a PSAP that is geographically near to the current location of the calling party. Also, whenever possible, the telephony service provider will automatically and electronically provide to the PSAP information about the current location of the calling party. This allows the 911 dispatcher to send needed assistance directly to the calling party, even in instances when the calling party is unable to communicate their current location or is simply unaware of their current location.

When an individual places an emergency call using a traditional telephone landline, it is relatively easy for the telephony service provider to determine the location of the calling party because the telephony service provider knows the physical address to which each landline is run.

In the case of cellular telephones and smartphones, determining the location of the calling party is more difficult. Often the best that the telephony service provider can do is indicate the location of the cellular base station through which the calling party is communicating. In some instances, a cellular service provider may be able to triangulate the approximate location of the calling party using the signals received from two or more cellular base stations. Either way, this at least narrows down the location of the calling party to a relatively small geographical area, which makes it possible for the telephony service provider to connect the call to a PSAP that serves that geographical location.

In some instances, a cellular telephone or smartphone will include a GPS unit that is able to determine the latitude and longitude of the device. This location information can be sent from the caller's telephony device to the telephony service provider, and/or the telephony service provider can query the caller's telephony device for such location information. When such location information is available, the telephony service provider uses the location information to connect the emergency call to an appropriate PSAP, and the telephony service provider also passes the location information along to the PSAP upon connecting the emergency call to the PSAP.

Today, mobile computing devices such as tablets and laptop computers are capable of running a telephony software application that provides the user with the ability to conduct audio and video calls. When a user of such a mobile computing device uses a telephony software application to make an emergency call, such as by dialing 911, it is still desirable for the location of the mobile computing device to be known for all the reasons explained above. However, many such mobile computing devices do not include a GPS unit that is capable of determining the present location of the mobile computing device. Also, because such a mobile computing device likely is communicating via a wireless data connection, and the locations of few wireless access points are mapped to physical locations, it is often difficult to determine the location at which the mobile computing device is positioned at a given moment of time, or when used to dial 911. As a result, it is often impossible for the telephony service provider to know the current location of a mobile computing device that is being used to place an emergency telephone call.

Currently, part of the process of installing and configuring most telephony software applications on a mobile computing device includes the user providing a "home" location for the mobile computing device. Most people enter their home address, which is the location where the mobile computing device is often located. Conversely, if the user is installing such a telephony software application on a mobile computing device that is mainly used in an office, the user may provide the office address as the home location of the mobile computing device. The telephony service provider records this location against the software application installed on the user's mobile computing device.

However, due to their portable nature, it is common for a tablet or laptop computer to be carried to locations away from the recorded home location. Thus, the telephony service provider cannot rely on the recorded home location to be the correct or current location of the mobile computing device when the user places an emergency call using the telephony software application.

If an individual carries a tablet or laptop computer to a location far from the recorded home location, and then uses the telephony software application on the mobile computing device to place an emergency telephone call, the telephony service provider will typically route the telephone call to a PSAP that serves the recorded home location. This is obviously problematic, as it results in the call being routed to a PSAP that cannot provide immediate assistance to the individual.

It would be possible for a telephony software application on a mobile computing device to ask the user to input the current location of the mobile computing device, each time that the telephony software application is loaded and run, or to at least confirm that the mobile computing device is at its recorded home location. However, this is somewhat burdensome for the user, and many users are unlikely to fully comply. Also, if the telephony software application is loaded and run when the mobile computing device is at a first location, and that location is recorded upon startup of the telephony software application, if the user thereafter travels to a new location while the telephony software application is still running, the originally recorded location will no longer be accurate.

It would be desirable for a user to have a simple way of communicating to the telephony service provider the current location of a mobile computing device running a telephony software application so that current location information can be used in connection with emergency calls. It also would be desirable to update the telephony service provider as to the current location of a mobile computing device running a telephony software application when the mobile computing device moves.

U.S. Patent Publication No. 2011/0159862 describes methods and apparatus for determining the location of a mobile device. US Patent Publication No. 2014/066095A1 discloses a method and a system for acquiring location information.

In accordance with one aspect of the present invention, there is provided a method performed by a server for providing location data to a first mobile computing device, as defined in claim 1. Preferred and optional features are set out in the dependent claims.

### BRIEF DESCRIPTION OF THE DRAWINGS

Figure 1 is a diagram of a communications environment in which methods embodying the invention could be performed;
Figure 2 is a diagram of selected elements of a telephony service provider;
Figure 3 is a diagram of selected elements of a location tracking system that could be part of the telephony service provider illustrated in Figure 2;
Figure 4 is a diagram of selected elements of a telephony software application that can be installed on a mobile computing device;
Figure 5 is a flowchart illustrating steps of a method performed by a location tracking system for obtaining and providing information about the location of a mobile computing device;
Figure 6 is a flowchart illustrating steps of first method performed by a telephony software application on a mobile computing device for obtaining location information;
Figure 7 is a flowchart illustrating steps of a second method performed by a location tracking system for obtaining and providing information about the location of a mobile computing device;
Figure 8 is a flowchart illustrating steps of a second method performed by a software application on a mobile computing device for obtaining location information; and
Figure 9 is a diagram of a computer system and associated peripherals which could embody the invention, or which could be used to practice methods embodying the invention.

### DETAILED DESCRIPTION OF PREFERRED EMBODIMENTS

The following detailed description of preferred embodiments refers to the accompanying drawings, which illustrate specific embodiments of the invention. Other embodiments having different structures and operations may not depart from the scope of the present invention as defined by the appended claims.

As mentioned above, it would be desirable for a telephony service provider to know the current location of a mobile telephony device that is running a telephony software application so that the telephony service provider can use the location information to connect emergency calls from the telephony software application to an appropriate PSAP, and so that the telephony service provider can provide the location information to the PSAP. One way to accomplish this is for the telephony software application to itself determine the location of the mobile computing device upon which it is installed, and for the telephony software application to provide that location information to the telephony service provider. However, many such mobile computing devices do not have a GPS receiver or any other similar device which can be used to determine the location of the mobile computing device.

It is common for a user to have both a smartphone and a mobile computing device, and for a telephony software application provided by a telephony service provider to be installed on both devices. If the user has registered both telephony software applications under the same account with the telephony service provider, one can assume that the user will often have both the mobile computing device and the smartphone in the user's possession at the same time.

In some methods embodying the invention, a user possesses both a first mobile computing device such as a laptop or a tablet that is incapable of determining its own location as well as a second mobile computing device such as a smartphone which is capable of determining its own location. The user will have installed a telephony software application provided by a telephony service provider on both the first and second mobile computing devices, and the user will have registered the telephony software application on both devices under the same account with a telephony service provider.

When the user initially runs the telephony software application on the first mobile computing device (which is incapable of determining its own location), the telephony software application will ask the user to either: (1) confirm that a previously recorded home location associated with the first mobile computing device is still correct, or (2) input the current location of the first mobile computing device. If the previously recorded home location is the current location of the first mobile computing device, the user can simply confirm that the home location is accurate. Initialization of the telephony software application will then be completed so that the user can then utilize the telephony software application to place and receive telephone calls, or possibly exchange text messages. If the previously recorded home location is not the current location of the first mobile computing device, the user could select various different options for providing the current location of the first mobile computing device.

In some instances, the user could speak or physically enter the current location of the first mobile computing device, and that current location information would be recorded by the telephony software application. The telephony software application may thereafter send the current location information to the telephony service provider, either immediately and/or when the user places an emergency telephone call. However, because some users may view entering the current location as burdensome, in methods embodying the invention the user may be presented with an opportunity to provide current location information in an alternate fashion.

Recall that the user has in his or her possession both the first mobile computing device that cannot determine its own location, as well as a second mobile computing device, such as a smartphone, that is able to determine its own location. Also, there is a telephony software application on both mobile computing devices that is registered under the same account with the telephony service provider. Under these circumstances, it is possible for the telephony service provider to query the second mobile computing device via the telephony software application installed thereon to obtain the current location of the second mobile computing device. We assume that the second mobile computing device is proximate to the first mobile computing device since both mobile computing devices are likely in the user's possession. Thus, the telephony service provider can record the location provided by the second mobile computing device as the current location of the first mobile computing device. The telephony service provider can also send that location information to the telephony software application on the first mobile computing device so that the current location of the first mobile computing device is also recorded by the telephony software application on the first mobile computing device.

As explained above, when the telephony software application on the first mobile computing device is first initialized and run, the user may be asked to confirm the current location of the first mobile computing device. As also explained above, the user may be given options as to how the current location information is input. The user could either confirm that a previously recorded location is still accurate, or the user could input the current location. The user could also be given a third option, in accordance with methods embodying the invention, where the location of a second mobile computing device is obtained and recorded as the current location of the first mobile computing device, as described above. However, the user would only select that third option if the user is aware that both the first and second mobile computing devices are currently in his or her possession and are located proximate to one another.

In the foregoing description, the current location of the second mobile computing device is obtained by the telephony service provider by sending a query for the location information to a telephony software application on the second mobile computing device. In alternate methods embodying the invention, the telephony service provider could obtain the current location of the second mobile computing device in other ways. For example, the telephony service provider could directly query the operating system of the second mobile computing device to obtain current location information. Such a query could be sent via direct data communications, or possibly via a push notification. The telephony service provider also could send a query to some third-party software application resident on the second mobile computing device. The third-party software application would then respond with information indicating the current location of the second mobile computing device. Here again, such a query could be sent directly to the third-party software application via direct data communications or via alternate means, such as a push notification. Regardless of the mechanism, the telephony service provider is able to obtain current location information for the second mobile computing device, and that location is presumed to correspond to the current location of the first mobile computing device.

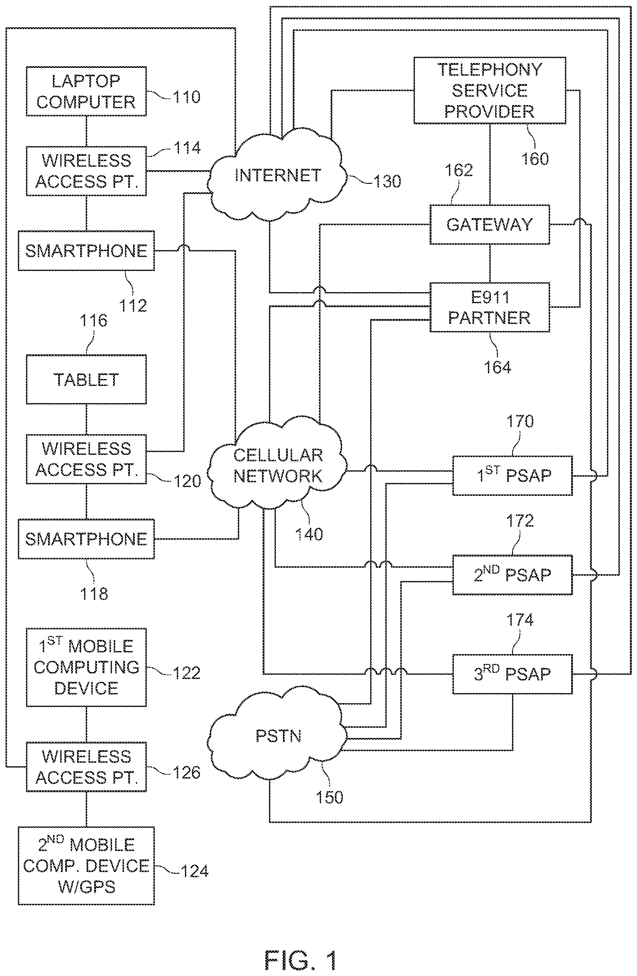

Figure 1 illustrates an environment in which systems and methods embodying the invention can be performed. In this environment, a first user has a laptop computer 110 and a smartphone 112. Both the laptop computer 110 and the smartphone 112 can connect to a wireless access point 114 to access a wide area network, such as the Internet 130. The smartphone 112 also may be capable of accessing the Internet 130 via a link to a cellular network 140.

A second user has a tablet 116 and a smartphone 118 that communicate with the Internet 130 through a second wireless access point 120. The smartphone 118 also may be capable of accessing the Internet 130 via a cellular network 140.

A third user has a first mobile computing device 122 that lacks the ability to determine its own location and a second mobile computing device 124 that includes a GPS unit. The first mobile computing device 122 and the second mobile computing device 124 can communicate with the Internet 130 via a third wireless access point 126. The first mobile computing device 122 could be any type of mobile computing device capable of running a telephony software application. Examples include a laptop computer, a personal digital assistant, a tablet computing device, as well as mobile computing devices which are not capable of determining their own location. The second mobile computing device 124 can include various mobile devices capable of determining their own location. Examples include a smartphone and a GPS enabled tablet or laptop computer, as well as various other devices which are both mobile and capable of determining their own location.

A telephony service provider 160 provides telephony service to telephony software applications resident on the laptop computer 110, the tablet 116 and the first mobile computing device 122 using packet-switched network techniques and protocols such as Voice over Internet Protocol (VoIP). VoIP may be implemented using proprietary protocols and protocols based on various standards, including Session Initiation Protocol (SIP), Media Gateway Control Protocol (MGCP), Real Time Transport Protocol (RTP), Session Description Protocol (SDP), H.323 and H.248. One such VoIP telephony service provider is Vonage Holdings Corp. of Holmdel, New Jersey. The telephony service provider 160 can communicate directly with the telephony software applications via the Internet 130. In addition, the telephony service provider 160 can communicate through a cellular network 140 or a publicly switched telephone network (PSTN) 150 via a gateway 162. This allows the telephony service provider 160 to connect telephone calls between the telephony software applications on the laptop computer 110, the tablet 116 and the first mobile computing device 122 and parties that are reachable via the cellular network 140 or the PSTN 150.

As illustrated in Figure 1, there are multiple Public Safety Answering Points (PSAPs) 170, 172, 174 that are capable of handling emergency telephone calls. Each of the PSAPs cover different geographical locations. When a telephony software application on the laptop computer 110, tablet 116 or first mobile computing device 122 is used to place an emergency telephone call, such as by dialing 911 in the United States, the telephone service provider 160 connects that emergency call to the PSAP that the telephony service provider 160 believes covers the geographical area in which the calling party is assumed to be located. The telephony service provider 160 will also provide any location information that the telephony service provider is able to obtain regarding the current location of the calling party to the PSAP.

In some embodiments, the telephony service provider 160 may utilize the services of an E911 Partner 164 to route emergency calls to the appropriate PSAP. In that instance, the telephony service provider 160 would route an emergency call to the E911 Partner 164, along with information about the location of the calling party. The E911 Partner 164 would then determine which PSAP should receive the emergency call, and the E911 Partner 164 would connect the call to the appropriate PSAP. Here again, the E911 Partner 164 would send information about the location of the calling party to the PSAP to which the emergency call is connected.

When the telephony service provider 160 receives a request from a telephony software application to setup an emergency services telephone call, the telephony service provider 160 may already have recorded a location for the mobile computing device upon which the telephony software application is running. Alternatively, the telephony service provider 160 may obtain information about the current location of the mobile computing device upon which the telephony software application is running in real time, and then use that location information to connect the call to an appropriate PSAP. One way of obtaining the location of the mobile computing device is to query the telephony software application for its current location. In still other embodiments, when the telephony software application is used to place an emergency telephone call, the telephony software application may automatically provide any available location information to the telephony service provider.

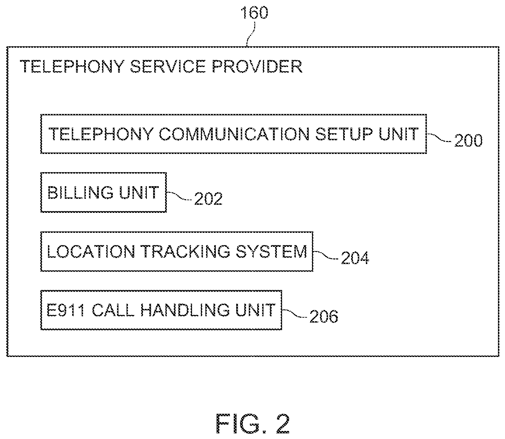

Figure 2 illustrates selected elements of the telephony service provider 160. The telephony service provider 160 includes a telephony communication setup unit 200, which is responsible for setting up outgoing telephone calls for its own user's and for connecting incoming telephone calls to its users. The telephony service provider 160 also includes a billing unit 202 which tracks calls that are made to and from its users, and which then bills the users for those calls.

The telephony service provider 160 further includes a location tracking system 204 which is used to track the current locations of user telephony devices as well as current locations of mobile computing devices that are running telephony software applications provided by the telephony service provider 160. In instances where a telephony software application is running on a mobile computing device that is unable to determine its own location, the location tracking system 204 can also be used to help the telephony software application on the mobile computing device determine the location of the mobile computing device. How this occurs is discussed in detail below.

The telephony service provider 160 also includes a E911 call handling unit 206. The E911 call handling unit 206 acts to connect an emergency call made by one of the telephony service provider's users to an appropriate PSAP which can then handle the emergency call. How the E911 handling unit 206 operates is also discussed in detail below.

The depiction of the telephony service provider 160 provided in Figure 2, only includes four elements. A typical telephony service provider 160 could include many additional elements in addition to those shown in Figure 2. Also, some embodiments of the telephony service provider 160 may not include all of the elements shown in Figure 2. Thus, the depiction of Figure 2 should in no way be considered limiting.

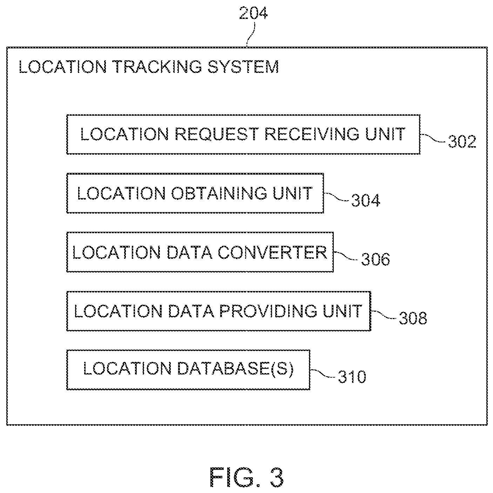

Figure 3 illustrates selected elements of the location tracking system 204, which could be a part of a telephony service provider 160 as illustrated in Figure 2. The location tracking system 204 includes a location request receiving unit 302 which receives a request for location information from a telephony software application running on a mobile computing device. Such a request would be seeking the current location of the mobile computing device upon which the telephony software application is running.

The location tracking system 204 also includes a location obtaining unit 304 which acts to obtain information about the current location of a first mobile computing device running a telephony software application. As will be explained in greater detail below, the location obtaining unit 304 typically obtains the location of a second mobile computing device which is presumed to be proximate to the first mobile computing device. The second mobile computing device is itself capable of determining its own location. The location obtaining unit 304 then uses the location of the second mobile computing device as the current location of the first mobile computing device.

The location tracking system 204 may also include a location data converter 306 which converts location information provided in a first format into location data in a second format. For example, the location data converter 306 could convert latitude and longitude coordinates into a street address.

The location tracking system 204 further includes a location data providing unit 308. The location data providing unit 308 provides determined location information back to a telephony software application running on a first mobile computing device which has requested the location information. In addition, in some embodiments the location data providing unit 308 also provides the current location of a mobile computing device running a telephony software application to the E911 call handling unit 206 of a telephony service provider 160 so that that the location information can be provided to a relevant PSAP when an emergency call is being routed to the PSAP.

The location tracking system 204 further includes location databases 310, which record the locations of various mobile computing devices that are running telephony software applications that can be used to setup and conduct telephone calls via the telephony service provider 160.

A location tracking system 204 could include additional elements in addition to those illustrated in Figure 3. Likewise, a location tracking system 204 need not include all of the elements illustrated in Figure 3. As a result, the depiction of Figure 3 should in no way be considered limiting.

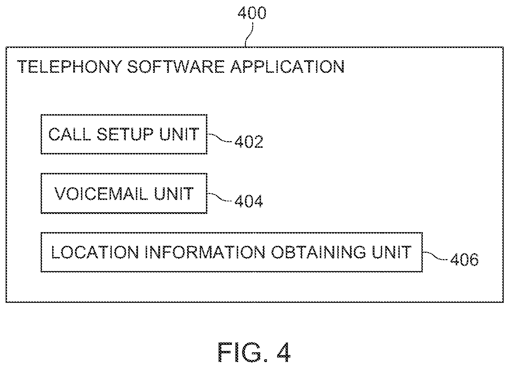

Figure 4 illustrates selected elements of a telephony software application 400 which could be running on a mobile computing device, and which can be used to setup and conduct telephone calls through the telephony service provider 160. The telephony software application 400 includes a call setup unit 402 which is used to setup and conduct telephone calls. The telephony software application 400 also includes a voicemail unit 404, which is responsible for recording messages from calling parties and also for playing back those recorded messages to the user.

The telephony software application 400 also includes a location information obtaining unit 406 which is configured to obtain the location of the mobile computing device upon which the telephony software application 400 is running. As mentioned above, the location information obtaining unit 406 can send a request for location information to the location request receiving unit 302 of a location tracking system 204 of the telephony service provider 160. Also, the location information obtaining unit 406 can receive location information from a location data providing unit 308 of the location tracking system 204. Such received location information can then be recorded by the telephony software application 400. As will be described in greater detail below, the location information obtaining unit 406 could obtain location information when the telephony software application is first run and initialized. In addition, on a periodic basis the location information obtaining unit 406 could obtain updated location information pertaining to the current location of the mobile computing device on which the telephony software application 400 is running.

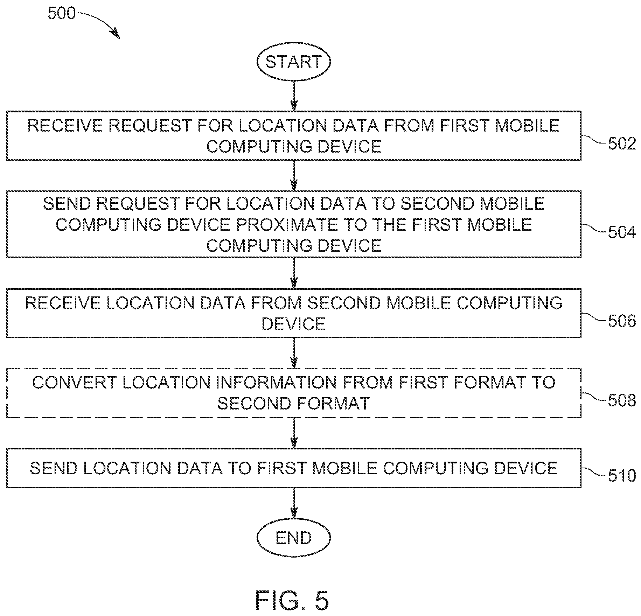

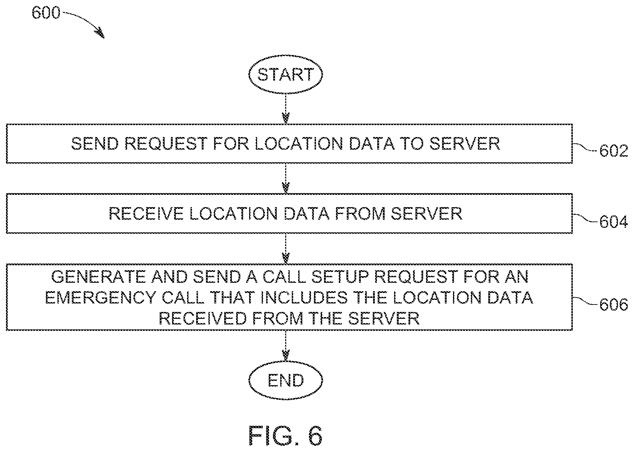

With the foregoing as background, we will now discuss several methods of obtaining and recording location information with references to Figures 5 and 6. Figure 5 depicts the steps of a method 500 that would be performed by the location tracking system 204 to obtain and provide location information to a telephony software application 400. Figure 6 illustrates steps of a method 600 that would be performed by the location obtaining unit 406 of a telephony software application 400 to obtain location information, and then use that location information to setup an emergency call, such as a call to 911 in the United States.

The basic process would start as illustrated in Figure 6 when a location information obtaining unit 406 of a telephony software application 400 sends a request for location information to a remote server in step 602 of the method 600 illustrated in Figure 6. The server to which the request for location data is sent could be part of the location request receiving unit 302 of the location tracking system 204, which is part of a telephony service provider 160. The request would be seeking information about the location of a first mobile computing device upon which the telephony software application 400 is running.

Shifting to Figure 5, the method 500 illustrated in Figure 5 would be performed by the location tracking system 204 of a telephony service provider 160. The method would begin and proceed to step 502, where a location request receiving unit 302 of the location tracking system 204 receives the request for location data sent by the location information obtaining unit 406 of the telephony software application 400. The method then proceeds to step 504 where a location obtaining unit 304 of the location tracking system 204 sends a request for location data to a second mobile computing device which is presumed to be proximate to the first mobile computing device upon which the telephony software application is running. One way for the location obtaining unit 304 to select the appropriate second mobile computing device to which the request is sent is to search for a second mobile computing device which is running a telephony software application which is registered to the same user or which is registered under the same account as the telephony software application running on the first mobile computing device. Alternatively, the location obtaining unit could identify a second mobile computing device that is known to be possessed and/or used by the same party that is using the telephony software application on the first mobile computing device.

As explained above, it would be common for a single user to have both a first mobile computing device that is not capable of determining its own location and a second mobile computing device such as a smartphone that is capable of determining its own location, and for both of those mobile computing devices to be running telephony software applications that are registered to the same user or under the same account. A method as described herein may only be performed if the user knows that both mobile computing devices are in his possession and where the user is specifically asking a telephony service provider to obtain the location of the second mobile computing device and to use the location of the second mobile computing device as the current location of the first mobile computing device.

In some instances, the request for location information sent to the second mobile computing device in step 504 could be a query sent to the operating system of the second mobile computing device, such as the operating system of a smartphone. The operating system of the second mobile computing device could then obtain the current location of the second mobile computing device from a GPS unit on the second mobile computing device. In other instances, the request for location information could be directed to a telephony software application on the user's second mobile computing device, and the telephony software application on the user's second mobile computing device could then request the current location of the second mobile computing device from a GPS unit resident on the second mobile computing device.

In still other instances, the location obtaining unit 304 could request information about the location of the user's second mobile computing device from some other third-party software application on the user's second computing device. For example, some users have installed a software application called "what3words" on their mobile computing devices. The what3words application was developed and released by a company of the same name in London, United Kingdom. When asked for the current location of the mobile computing device, the "what3words" software application returns three common English-language words which are indicative of the current location of the mobile computing device.

The "what3words" software application obtains the current latitude and longitude of the mobile computing device from a GPS unit on the mobile computing device, and then that location is converted into the three-word combination that corresponds to the location. Thus, a third-party software application such as the "what3words" application on a user's mobile computing device also could be queried to obtain the location of the mobile computing device, although the format of the location information that is provided in response to the query might be different from the format reported by a GPS unit.

In still other embodiments, it may be possible for the location obtaining unit 304 to send a query to an application programming interface (API) run by a third party which tracks the current locations of various user mobile computing devices. The query sent to the location API can request the current location of a user's second mobile computing device. That query might be sent with credentials provided by the location API during a registration process. The location API would then return the current location of the user's second mobile computing device.

Returning now to Figure 5, regardless of where the request is sent in step 504, in step 506 the location obtaining unit 304 receives information about the current location of the user's second computing device. As mentioned above, the location information obtained in step 506 could be provided in a format which is different from a format preferred by the telephony software application on the user's first mobile computing device. If that is the case, in an optional step 508 the location data converter 306 of the location tracking system 204 converts the format of the location information received in step 506 into a different format which is usable by the telephony software application on the user's first mobile computing device. This is an optional step, which may not be required if the location information obtained in step 506 is already provided in a format useable by the telephony software application on the user's first mobile computing device.

Finally, in step 510 a location data providing unit 308 of the location tracking system 204 sends location information about the current location of the second mobile computing device to the telephony software application on the user's first mobile computing device. The method illustrated in Figure 5 would then end.

Returning to Figure 6, in step 604 the location information obtaining unit 406 of the telephony software application on the first mobile computing device receives the location information about the location of the second mobile computing device from the location data providing unit 308 of the location tracking system 204. Next, in step 606, the call setup unit 402 of the telephony software application 400 generates a call setup request directed to an emergency telephone number, such as 911 in the United States. The call setup request includes the location information received from the location data providing unit 308. The call setup unit 402 then sends the call setup request to the telephony communication setup unit 200 of the telephony service provider 160.

Thereafter, the telephony communication setup unit 200 connects the emergency call to an appropriate PSAP, based on the location information included in the call setup request. The location information would be passed along to the PSAP when the call is connected to the PSAP. Alternatively, the telephony communication setup unit 200 could send the call setup request on to a E911 Partner 164, along with the location information, and the E911 Partner 164 could identify the appropriate PSAP and connect the call to that PSAP, also providing the location information to the PSAP during call setup. The location information that is sent to the PSAP or to the E911 Partner 164 could be in the same format that the location information exists in the original call setup request generated and sent by the call setup unit 402. Alternatively, the telephony communication setup unit 200 or the E911 Partner 164 may translate the location information in the call setup request into a different format before providing the location information to the PSAP.

The call setup unit 402 of the telephony software application 400 can insert location information into a call setup request in various ways. In some embodiments, where the call setup request is a SIP request, the location information can be inserted into a header of the call setup request. The location information itself could be expressed as a street address, as GPS latitude and longitude coordinates, or in some other fashion.

For example, it would be possible for the location information inserted into the call setup request to be expressed as a location token that corresponds to a particular street address or set of latitude and longitude coordinates. The location token could then be interpreted by the telephony communication setup unit 200 and translated into address information that is expressed in a different format. When the telephony communication setup unit 200 connects the emergency call to a PSAP or to a E911 Partner 164, the location information could be expressed in that different translated format. Of course, the telephony communication setup unit 200 could simply pass along the untranslated location token to the PSAP or the E911 Partner 164, provided the PSAP would understand how to interpret the location token.

Although the method illustrated in Figure 6 ends once the emergency call setup request is sent to the telephony communication setup unit 200 of the telephony service provider 160, it is to be understood that the emergency call would then be connected to an appropriate PSAP, and the calling party would then speak to emergency services personnel at the PSAP.

In some embodiments, when the location obtaining unit 304 of the location tracking system 204 obtains information about the location of the user's second mobile computing device, which is presumed to be essentially the same as the location of the user's first mobile computing device, that information will be recorded in one or more location databases 310 maintained by the location tracking system 204. This can include updating a database 310 listing the location for the first mobile computing device based on the assumption that the first mobile computing device is proximate to the second mobile computing device.

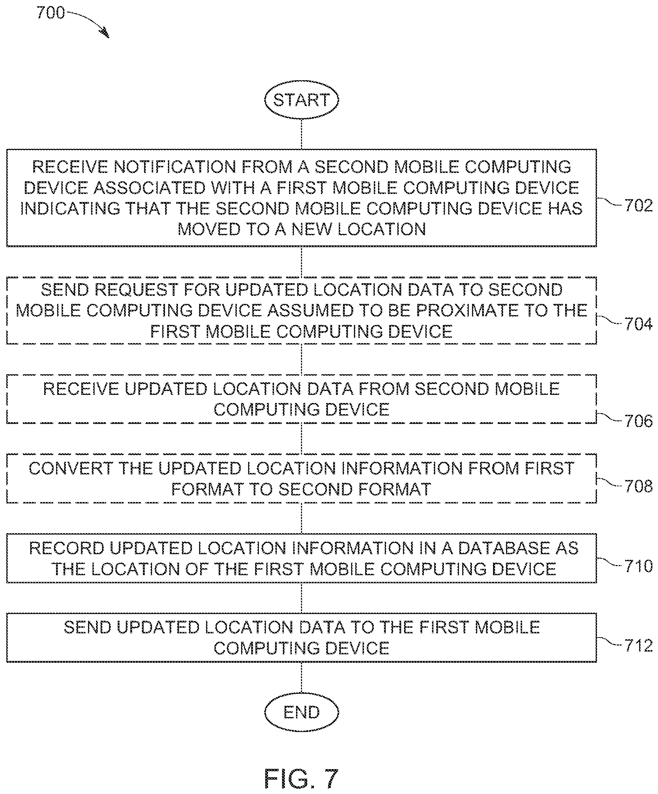

Figure 7 illustrates steps of a method 700 that would be performed by the location tracking system 204 when the location tracking system 204 learns that a second mobile computing device associated with a first mobile computing device has moved to a new location. This can occur when a telephony software application on the second mobile computing device notes that the location of the second mobile computing device has changed, triggering the telephony software application to report that location change to the location tracking system 204.

The telephony software application may be configured to report a location change only after a delay period has expired since arriving at a new location. This would prevent the telephony software application from sending frequent location change messages in instances where the second mobile computing device is moving quickly to new locations, and then stopping only temporarily, such as when driving in city traffic.

The method 700 begins and proceeds to step 702, where the location tracking system 204 receives a notification indicating that the second mobile computing device has moved to a new location. In some embodiments, this notification could be received directly from the telephony software application on the second mobile computing device. In other instances, the telephony software application on the second mobile computing device may report the location change to some other element of a telephony service provider 160, and that element could then alert the location tracking system 204 that the second mobile computing device has moved to a new location.

If the location change notification received by the location tracking system 204 also includes information identifying the new location of the second mobile computing device, the method could then proceed directly to steps 708 or 710, depending on the circumstances. In other embodiments, the method would then proceed to option step 704 where the location obtaining unit 304 sends a request for location information to the telephony software application on the second mobile computing device. Next, in optional step 706 the location obtaining unit 304 receives a message back from the telephony software application on the second mobile computing device that includes information identifying the current location of the second mobile computing device.

If the received location information is in a different format than is typically stored in the location databases 310, then in optional step 708, the location data converter 306 converts the received location data into a different format.

Next, in step 710, the location of the second mobile computing device is recorded in the appropriate location database 310. However, step 710 also includes updating the location information for a first mobile computing device that is associated with the second mobile computing device in those instances where the first mobile computing device is assumed to be proximate to the second mobile computing device. The method would then proceed to step 712, where the location data providing unit 308 sends a message to a telephony software application on the first mobile computing device that includes the updated location information. The method then ends.

The telephony software applications on either or both of the first and second mobile computing devices can be configurable to tie the locations of the first and second mobile computing device together. For example, it may be possible to configure the telephony software application on the first mobile computing device such that the location tracking system 204 will thereafter consider the location of the first mobile computing device to be virtually the same as the location of the second mobile computing device. The user of the first mobile computing device could engage this setting whenever the user of the first mobile computing device knows that the first and second mobile computing devices will be proximate to one another. Once this setting is engaged, each time that the location tracking system 204 updates the location of the second mobile computing device, the location tracking system 204 will also update the location of the first mobile computing device to be the same location.

If the user of the second mobile computing device thereafter determines that the first mobile computing device is not likely to be proximate to the second mobile computing device, the user can re-configure the settings of the telephony software application on the first mobile computing device to specify a specific location for the first mobile computing device.

When a user thereafter utilizes the telephony software application on the user's first mobile computing device to place an emergency services call, such as by dialing 911 in the United States, that request would be received and processed by an E911 call handling unit 206 of the telephony service provider 160. The E911 call handling unit 206 could obtain the location of the user's first mobile computing device either from one of the location databases 310 maintained by the location tracking system 204, or by sending a query to the telephony software application on the user's first computing device asking for its current location. In some embodiments, when a telephony software application places an emergency services call, the location information may be automatically provided to the telephony service provider 160 as part of the request to set up the emergency services call.

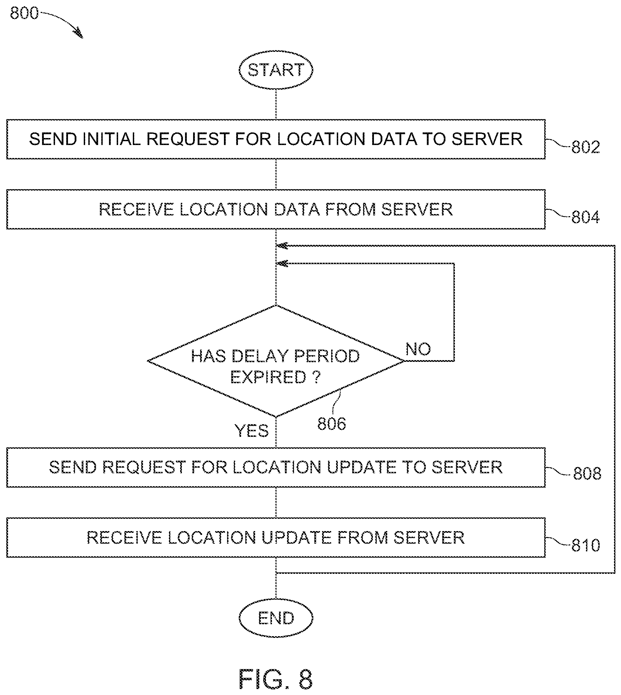

Figure 8 illustrates an alternate method 800 which can also be performed by a telephony software application residing on a user's first mobile computing device. This method is similar to the one discussed above in connection with Figure 6, however, in this alternate method the location information for the location of the first mobile computing device is periodically updated.

The method illustrated in Figure 8 begins and proceeds to step 802 where the location information obtaining unit 406 of a telephony software application 400 sends an initial request for location data to a server, such as a location request receiving unit 302 of a location tracking system 204. Step 802 would typically be performed when the telephony software application 400 is first loaded and run on the first mobile computing device, or when the telephony software application wakes after being placed in the background of the operating system. In step 804, the location information obtaining unit 406 of the telephony software application 400 receives back location information from a location data providing unit 308 of the location tracking system 204. As explained above, the location information would have been obtained from a second mobile computing device which is presumed to be located proximate to the first mobile computing device.

The method would then advance to step 806, where a delay period is allowed to expire. The delay period could vary in duration depending upon various factors such as whether the user typically moves on a frequent basis or is typically stationary for long periods of time. Also, the nature or type of the first mobile computing device may influence the duration of the delay period. Once the delay period in step 806 expires, the method proceeds to step 808 where a request for renewed location information is sent from the location information obtaining unit 406 to the location request receiving unit 302 of a location tracking system 204. In step 810, the location information obtaining unit 406 obtains updated location information from the location data providing unit 308 of the location tracking system 204. Here again, that location information would have been obtained from a second mobile computing device which is presumed to be located proximate to the first mobile computing device.

The method would then loop back to step 806 and steps 806, 808 and 810 would repeatedly be performed to periodically update the location of the first mobile computing device until the telephony software application is shutdown.

The invention may be embodied in methods, apparatus, electronic devices, and/or computer program products. Accordingly, the invention may be embodied in hardware and/or in software (including firmware, resident software, micro-code, and the like), which may be generally referred to herein as a "circuit" or "module". Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device. These computer program instructions may also be stored in a computer-usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks.

The computer-usable or computer-readable medium may be, for example but not limited to, an electronic, magnetic, optical, electromagnetic, infrared, or semiconductor system, apparatus or device. More specific examples (a non-exhaustive list) of the computer-readable medium include the following: hard disks, optical storage devices, magnetic storage devices, an electrical connection having one or more wires, a portable computer diskette, a random access memory (RAM), a read-only memory (ROM), an erasable programmable read-only memory (EPROM or Flash memory), an optical fiber, and a compact disc read-only memory (CD-ROM).

Computer program code for carrying out operations of the present invention may be written in an object oriented programming language, such as Java^{®}, Smalltalk or C++, and the like. However, the computer program code for carrying out operations of the present invention may also be written in conventional procedural programming languages, such as the "C" programming language and/or any other lower level assembler languages. It will be further appreciated that the functionality of any or all of the program modules may also be implemented using discrete hardware components, one or more Application Specific Integrated Circuits (ASICs), or programmed Digital Signal Processors or microcontrollers.

The foregoing description, for purpose of explanation, has been described with reference to specific embodiments. However, the illustrative discussions above are not intended to be exhaustive or to limit the invention to the precise forms disclosed. Many modifications and variations are possible within the scope of the invention as defined by the appended claims.

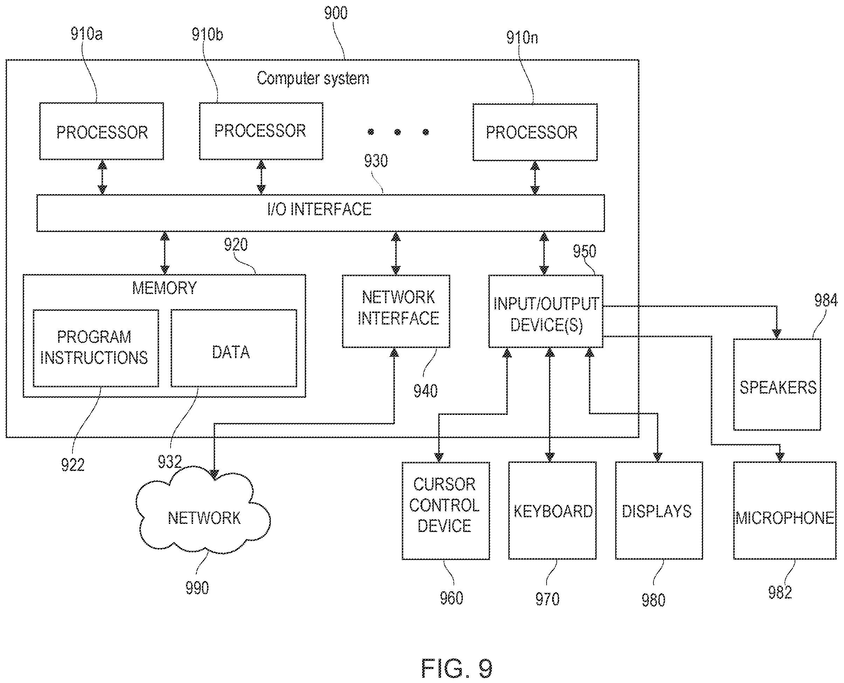

Figure 9 depicts a computer system 900 that can be utilized in various embodiments of the present invention to implement the invention according to one or more embodiments. The various embodiments as described herein may be executed on one or more computer systems, which may interact with various other devices. One such computer system is the computer system 900 illustrated in Figure 9. The computer system 900 may be configured to implement the methods described above. The computer system 900 may be used to implement any other system, device, element, functionality or method of the above-described embodiments. In the illustrated embodiments, the computer system 900 may be configured to implement the disclosed methods as processor-executable executable program instructions 922 (e.g., program instructions executable by processor(s) 910) in various embodiments.

In the illustrated embodiment, computer system 900 includes one or more processors 910a-910n coupled to a system memory 920 via an input/output (I/O) interface 930. Computer system 900 further includes a network interface 940 coupled to I/O interface 930, an input/output devices interface 950. The input/output devices interface 950 facilitates connection of external I/O devices to the system 900, such as cursor control device 960, keyboard 970, display(s) 980, microphone 982 and speakers 984. In various embodiments, any of the components may be utilized by the system to receive user input described above. In various embodiments, a user interface may be generated and displayed on display 980. In some cases, it is contemplated that embodiments may be implemented using a single instance of computer system 800, while in other embodiments multiple such systems, or multiple nodes making up computer system 900, may be configured to host different portions or instances of various embodiments. For example, in one embodiment some elements may be implemented via one or more nodes of computer system 900 that are distinct from those nodes implementing other elements. In another example, multiple nodes may implement a computer system 900 in a distributed manner.

In different embodiments, the computer system 900 may be any of various types of devices, including, but not limited to, a personal computer system, desktop computer, laptop, notebook, or netbook computer, a portable computing device, a mainframe computer system, handheld computer, workstation, network computer, a smartphone, a camera, a set top box, a mobile device, a consumer device, video game console, handheld video game device, application server, storage device, a peripheral device such as a switch, modem, router, or in general any type of computing or electronic device.

In various embodiments, the computer system 900 may be a uniprocessor system including one processor 910, or a multiprocessor system including several processors 910 (e.g., two, four, eight, or another suitable number). Processors 910 may be any suitable processor capable of executing instructions. For example, in various embodiments processors 910 may be general-purpose or embedded processors implementing any of a variety of instruction set architectures (ISAs). In multiprocessor systems, each of processors 910 may commonly, but not necessarily, implement the same ISA.

System memory 920 may be configured to store program instructions 922 and/or data 932 accessible by processor 910. In various embodiments, system memory 920 may be implemented using any suitable memory technology, such as static random access memory (SRAM), synchronous dynamic RAM (SDRAM), nonvolatile/Flash-type memory, or any other type of memory. In the illustrated embodiment, program instructions and data implementing any of the elements of the embodiments described above may be stored within system memory 920. In other embodiments, program instructions and/or data may be received, sent or stored upon different types of computer-accessible media or on similar media separate from system memory 920 or computer system 900.

In one embodiment, I/O interface 930 may be configured to coordinate I/O traffic between processor 910, system memory 920, and any peripheral devices in the device, including network interface 940 or other peripheral interfaces, such as input/output devices interface 950. In some embodiments, I/O interface 930 may perform any necessary protocol, timing or other data transformations to convert data signals from one component (e.g., system memory 920) into a format suitable for use by another component (e.g., processor 910). In some embodiments, I/O interface 930 may include support for devices attached through various types of peripheral buses, such as a variant of the Peripheral Component Interconnect (PCI) bus standard or the Universal Serial Bus (USB) standard, for example. In some embodiments, the function of I/O interface 930 may be split into two or more separate components, such as a north bridge and a south bridge, for example. Also, in some embodiments some or all of the functionality of I/O interface 930, such as an interface to system memory 920, may be incorporated directly into processor 910.

Network interface 940 may be configured to allow data to be exchanged between computer system 900 and other devices attached to a network (e.g., network 990), such as one or more external systems or between nodes of computer system 900. In various embodiments, network 990 may include one or more networks including but not limited to Local Area Networks (LANs) (e.g., an Ethernet or corporate network), Wide Area Networks (WANs) (e.g., the Internet), wireless data networks, some other electronic data network, or some combination thereof. In various embodiments, network interface 940 may support communication via wired or wireless general data networks, such as any suitable type of Ethernet network, for example; via telecommunications/telephony networks such as analog voice networks or digital fiber communications networks; via storage area networks such as Fiber Channel SANs, or via any other suitable type of network and/or protocol.

External input/output devices interface 950 may, in some embodiments, include one or more display terminals, keyboards, keypads, touchpads, scanning devices, voice or optical recognition devices, or any other devices suitable for entering or accessing data by one or more computer systems 900. Multiple input/output devices may be present in computer system 900 or may be distributed on various nodes of computer system 900. In some embodiments, similar input/output devices may be separate from computer system 900 and may interact with one or more nodes of computer system 900 through a wired or wireless connection, such as over network interface 940.

In some embodiments, the illustrated computer system may implement any of the operations and methods described above, such as the methods illustrated by the flowcharts of Figures 5-8. In other embodiments, different elements and data may be included.

Those skilled in the art will appreciate that the computer system 900 is merely illustrative and is not intended to limit the scope of embodiments. In particular, the computer system and devices may include any combination of hardware or software that can perform the indicated functions of various embodiments, including computers, network devices, Internet appliances, PDAs, wireless phones, pagers, and the like. Computer system 900 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

Those skilled in the art will also appreciate that, while various items are illustrated as being stored in memory or on storage while being used, these items or portions of them may be transferred between memory and other storage devices for purposes of memory management and data integrity. Alternatively, in other embodiments some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some embodiments, instructions stored on a computer-accessible medium separate from computer system 900 may be transmitted to computer system 900 via transmission media or signals such as electrical, electromagnetic, or digital signals, conveyed via a communication medium such as a network and/or a wireless link. Various embodiments may further include receiving, sending or storing instructions and/or data implemented in accordance with the foregoing description upon a computer-accessible medium or via a communication medium. In general, a computer-accessible medium may include a storage medium or memory medium such as magnetic or optical media, e.g., disk or DVD/CD-ROM, volatile or non-volatile media such as RAM (e.g., SDRAM, DDR, RDRAM, SRAM, and the like), ROM, and the like.

In many of the foregoing descriptions, a software application running on a telephony device may perform certain functions related to the disclosed technology. In alternate embodiments, a browser running on the telephony device may access a software application that is running on some other device via a data network connection. For example, the software application could be running on a remote server that is accessible via a data network connection. The software application running elsewhere, and accessible via a browser on the telephony device may provide all of the same functionality as an application running on the telephony device itself. Thus, any references in the foregoing description and the following claims to an application running on a telephony device are intended to also encompass embodiments and implementations where a browser running on a telephony device accesses a software application running elsewhere via a data network.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

While the invention has been described in connection with what is presently considered to be the most practical and preferred embodiment, it is to be understood that the invention is not to be limited to the disclosed embodiment, but on the contrary, is intended to cover various modifications included within the scope of the appended claims.

## Claims

1. A method (500) performed by a server for providing location data to a first mobile computing device, comprising:
receiving from the first mobile computing device a first request message generated by the first mobile computing device and requesting location data indicative of the present location of the first mobile computing device (502), wherein the first mobile computing device has a first telephony software application registered under an account with a telephony service provider;
identifying a second mobile computing device that has a second telephony software application that is registered to the same user as the first telephony software application on the first mobile computing device or is registered under the same account with the telephony service provider as the first telephony software application on the first mobile computing device and wherein the second mobile computing device is presumed to be located proximate to the first mobile computing device;
generating and sending to the second mobile computing device a second request message requesting location data that is indicative of the present location of the second mobile computing device (504);
receiving, from the second mobile computing device, a first response message generated by the second mobile computing device that includes location data that is indicative of the present location of the second mobile computing device (506), wherein the location data received from the second mobile computing device is in a first location data format;
converting the location data received from the second mobile computing device from the first location data format into a second location data format (508); and
generating and sending, to the first mobile computing device, a second response message that includes the converted location data in the second location data format that is indicative of the present location of the first mobile computing device (510), where the location data indicative of the present location of the first mobile computing device is based on the received location data indicative of the present location of the second mobile computing device.

2. The method of claim 1, further comprising storing location data that is indicative of the present location of the first mobile computing device in a location database that cross-references identifiers of mobile computing devices with the present locations of those mobile computing devices, where the location data indicative of the present location of the first mobile computing device that is stored in the location database is based on the received location data indicative of the present location of the second mobile computing device.

3. The method of claim 1, wherein the first request message requesting location data indicative of the present location of the first mobile computing device is received from a first telephony software application running on the first mobile computing device.

4. The method of claim 3, wherein the step of sending a second response message that includes location data indicative of the present location of the first mobile computing device to the first mobile computing device (510) comprises sending the location data to the first telephony software application running on the first mobile computing device.

5. The method of claim 3, wherein the step of sending a second request message requesting location data that is indicative of the present location of the second mobile computing device (504) comprises sending the second request message to a second telephony software application on the second mobile computing device, and where the first telephony software application on the first mobile computing device and the second telephony software application on the second mobile computing device were provided by the same telephony service provider.

6. The method of claim 1, wherein the step of sending a second request message requesting location data that is indicative of the present location of the second mobile computing device (504) comprises sending the second request message to a telephony software application on the second mobile computing device.

7. The method of claim 1, wherein the step of sending a second request message requesting location data that is indicative of the present location of the second mobile computing device (504) comprises sending a push notification to a telephony software application on the second mobile computing device.

8. The method of claim 1, wherein the location data indicative of the present location of the second mobile computing device that is received from the second mobile computing device comprises latitude and longitude coordinates obtained from a GPS receiver of the second mobile computing device, and wherein the converting step (508) comprises converting the latitude and longitude into a street address.

9. The method of claim 1, wherein the location data indicative of the present location of the second mobile computing device that is received from the second mobile computing device comprises a natural language multiword statement that is indicative of the present location of the second mobile computing device.

10. The method of claim 1, wherein the converted location data in the second location data format is indicative of the present location of the first mobile computing device that is sent to the first mobile computing device comprises a street address.

11. The method of claim 1, wherein the second mobile computing device is identified as a second mobile computing device that is known to be possessed by the user of the first mobile computing device.

12. The method of claim 1, wherein the step of generating and sending the second request message to the second mobile computing device (504) is performed in response to receipt of the first request message.

13. The method of claim 1, wherein the server sends the second request message to the second mobile computing device in response to receipt of the first request message received from the first mobile computing device, and wherein the first response message that the server receives from the second mobile computing device is sent by the second mobile computing device in response to the second request message.

## Patentansprüche

1. Ein Verfahren (500), das von einem Server durchgeführt wird, um Standortdaten für ein erstes mobiles Computergerät bereitzustellen, und Folgendes umfasst:
Empfangen einer ersten Anfragenachricht vom ersten mobilen Computergerät, die vom ersten mobilen Computergerät erzeugt wird und Standortdaten anfordert, die den aktuellen Standort des ersten mobilen Computergeräts (502) anzeigen, wobei das erste mobile Computergerät über eine erste Telefoniesoftwareanwendung verfügt, die unter einem Konto bei einem Telefoniedienstanbieter registriert ist;
Identifizieren eines zweiten mobilen Computergeräts, das über eine zweite Telefoniesoftwareanwendung verfügt, die auf denselben Benutzer wie die erste Telefoniesoftwareanwendung auf dem ersten mobilen Computergerät registriert ist oder unter demselben Konto bei dem Telefondienstanbieter registriert ist wie die erste Telefoniesoftwareanwendung auf dem ersten mobilen Computergerät, und wobei davon ausgegangen wird, dass sich das zweite mobile Computergerät in der Nähe des ersten mobilen Computergeräts befindet;
Erzeugen und Senden einer zweiten Anfragenachricht an das zweite mobile Computergerät, in der Standortdaten angefordert werden, die den aktuellen Standort des zweiten mobilen Computergeräts (504) anzeigen;
Empfangen einer ersten Antwortnachricht vom zweiten mobilen Computergerät, die vom zweiten mobilen Computergerät erzeugt wird und Standortdaten enthält, die den aktuellen Standort des zweiten mobilen Computergeräts (506) anzeigen, wobei die vom zweiten mobilen Computergerät empfangenen Standortdaten in einem ersten Standortdatenformat vorliegen;
Umwandeln der vom zweiten mobilen Computergerät empfangenen Standortdaten aus dem ersten Standortdatenformat in ein zweites Standortdatenformat (508) und
Erzeugen und Senden einer zweiten Antwortnachricht an das erste mobile Computergerät, die die umgewandelten Standortdaten im zweiten Standortdatenformat enthält, das den aktuellen Standort des ersten mobilen Computergeräts (510) anzeigt, wobei die Standortdaten, die den aktuellen Standort des ersten mobilen Computergeräts anzeigen, auf den empfangenen Standortdaten basieren, die den aktuellen Standort des zweiten mobilen Computergeräts anzeigen.

2. Das Verfahren nach Anspruch 1, das ferner das Speichern von Standortdaten, die den aktuellen Standort des ersten mobilen Computergeräts anzeigen, in einer Standortdatenbank umfasst, die Kennungen mobiler Computergeräte mit den aktuellen Standorten dieser mobilen Computergeräte vergleicht, wobei die Standortdaten, die den aktuellen Standort des ersten mobilen Computergeräts anzeigen und in der Standortdatenbank gespeichert sind, auf den empfangenen Standortdaten basieren, die den aktuellen Standort des zweiten mobilen Computergeräts anzeigen.

3. Das Verfahren nach Anspruch 1, wobei die erste Anfragenachricht, die Standortdaten anfordert, die den aktuellen Standort des ersten mobilen Computergeräts anzeigen, von einer ersten Telefoniesoftwareanwendung empfangen wird, die auf dem ersten mobilen Computergerät läuft.

4. Das Verfahren nach Anspruch 3, wobei der Schritt des Sendens einer zweiten Antwortnachricht, die Standortdaten enthält, die den aktuellen Standort des ersten mobilen Computergeräts anzeigen, an das erste mobile Computergerät (510) das Senden der Standortdaten an die erste Telefoniesoftwareanwendung umfasst, die auf dem ersten mobilen Computergerät läuft.

5. Das Verfahren nach Anspruch 3, wobei der Schritt des Sendens einer zweiten Anfragenachricht, die Standortdaten anfordert, die den aktuellen Standort des zweiten mobilen Computergeräts (504) anzeigen, das Senden der zweiten Anfragenachricht an eine zweite Telefoniesoftwareanwendung auf dem zweiten mobilen Computergerät umfasst, und wobei die erste Telefoniesoftwareanwendung auf dem ersten mobilen Computergerät und die zweite Telefoniesoftwareanwendung auf dem zweiten mobilen Computergerät von demselben Telefoniedienstanbieter bereitgestellt wurden.

6. Das Verfahren nach Anspruch 1, wobei der Schritt des Sendens einer zweiten Anfragenachricht, die Standortdaten anfordert, die den aktuellen Standort des zweiten mobilen Computergeräts (504) anzeigen, das Senden der zweiten Anfragenachricht an eine Telefoniesoftwareanwendung auf dem zweiten mobilen Computergerät umfasst.

7. Das Verfahren nach Anspruch 1, wobei der Schritt des Sendens einer zweiten Anfragenachricht, die Standortdaten anfordert, die den aktuellen Standort des zweiten mobilen Computergeräts (504) anzeigen, das Senden einer Push-Benachrichtigung an eine Telefoniesoftwareanwendung auf dem zweiten mobilen Computergerät umfasst.

8. Das Verfahren nach Anspruch 1, wobei die Standortdaten, die den aktuellen Standort des zweiten mobilen Computergeräts anzeigen und vom zweiten mobilen Computergerät empfangen werden, Breitengrad- und Längengradkoordinaten umfassen, die von einem GPS-Empfänger des zweiten mobilen Computergeräts erhalten werden, und wobei der Umwandlungsschritt (508) das Umwandeln des Breitengrads und des Längengrads in eine Straßenadresse umfasst.

9. Das Verfahren nach Anspruch 1, wobei die Standortdaten, die den aktuellen Standort des zweiten mobilen Computergeräts anzeigen und vom zweiten mobilen Computergerät empfangen werden, eine natürlichsprachliche Mehrwortanweisung umfassen, die den aktuellen Standort des zweiten mobilen Computergeräts anzeigt.

10. Das Verfahren nach Anspruch 1, wobei die umgewandelten Standortdaten im zweiten Standortdatenformat den aktuellen Standort des ersten mobilen Computergeräts anzeigen, der an das erste mobile Computergerät gesendet wird und eine Straßenadresse umfasst.

11. Das Verfahren nach Anspruch 1, wobei das zweite mobile Computergerät als ein zweites mobiles Computergerät identifiziert wird, von dem bekannt ist, dass es sich im Besitz des Benutzers des ersten mobilen Computergeräts befindet.

12. Das Verfahren nach Anspruch 1, wobei der Schritt des Erzeugens und Sendens der zweiten Anfragenachricht an das zweite mobile Computergerät (504) als Reaktion auf den Empfang der ersten Anfragenachricht durchgeführt wird.

13. Das Verfahren nach Anspruch 1, wobei der Server die zweite Anfragenachricht als Reaktion auf den Empfang der ersten Anfragenachricht, die vom ersten mobilen Computergerät empfangen wurde, an das zweite mobile Computergerät sendet, und wobei die erste Antwortnachricht, die der Server vom zweiten mobilen Computergerät empfängt, vom zweiten mobilen Computergerät als Reaktion auf die zweite Anfragenachricht gesendet wird.

## Revendications

1. Une méthode (500) exécutée par un serveur permettant de fournir des données de localisation à un premier dispositif informatique mobile, consistant à :
recevoir, depuis le premier dispositif informatique mobile, un premier message de demande généré par le premier dispositif informatique mobile et demandant des données de localisation indiquant la localisation actuelle du premier dispositif informatique mobile (502), dans laquelle le premier dispositif informatique mobile est doté d'une première application logicielle de téléphonie enregistrée sous un compte auprès d'un fournisseur de services de téléphonie ;
identifier un deuxième dispositif informatique mobile doté d'une deuxième application logicielle de téléphonie enregistrée au nom du même utilisateur que la première application logicielle de téléphonie sur le premier dispositif informatique mobile ou enregistrée sous le même compte auprès du fournisseur de services de téléphonie que la première application logicielle de téléphonie sur le premier dispositif informatique mobile et dans laquelle le deuxième dispositif informatique mobile est supposé se trouver à proximité du premier dispositif informatique mobile ;
générer et envoyer au deuxième dispositif informatique mobile un deuxième message de demande demandant des données de localisation indiquant la localisation actuelle du deuxième dispositif informatique mobile (504) ;
recevoir, depuis le deuxième dispositif informatique mobile, un premier message de réponse généré par le deuxième dispositif informatique mobile comprenant des données de localisation indiquant la localisation actuelle du deuxième dispositif informatique mobile (506), dans laquelle les données de localisation reçues depuis le deuxième dispositif informatique mobile se trouvent dans un premier format de données de localisation ;
convertir les données de localisation reçues depuis le deuxième dispositif informatique mobile du premier format de données de localisation en un deuxième format de données de localisation (508) ; et à
générer et envoyer au premier dispositif informatique mobile un deuxième message de réponse comprenant les données de localisation converties dans le deuxième format de données de localisation indiquant la localisation actuelle du premier dispositif informatique mobile (510), dans laquelle les données de localisation indiquant la localisation actuelle du premier dispositif informatique mobile sont basées sur les données de localisation reçues indiquant la localisation actuelle du deuxième dispositif informatique mobile.

2. La méthode de la revendication 1, consistant en outre à stocker des données de localisation indiquant la localisation actuelle du premier dispositif informatique mobile dans une base de données de localisation qui établit des références croisées entre les identifiants des dispositifs informatiques mobiles et les localisations actuelles de ces dispositifs informatiques mobiles, dans laquelle les données de localisation indiquant la localisation actuelle du premier dispositif informatique mobile qui sont stockées dans la base de données de localisation sont basées sur les données de localisation reçues indiquant la localisation actuelle du deuxième dispositif informatique mobile.

3. La méthode de la revendication 1, dans laquelle le premier message de demande demandant des données de localisation indiquant la localisation actuelle du premier dispositif informatique mobile est reçu depuis une première application logicielle de téléphonie fonctionnant sur le premier dispositif informatique mobile.

4. La méthode de la revendication 3, dans laquelle l'étape consistant à envoyer un deuxième message de réponse comprenant des données de localisation indiquant la localisation actuelle du premier dispositif informatique mobile au premier dispositif informatique mobile (510) consiste à envoyer les données de localisation à la première application logicielle de téléphonie fonctionnant sur le premier dispositif informatique mobile.

5. La méthode de la revendication 3, dans laquelle l'étape consistant à envoyer un deuxième message de demande demandant des données de localisation indiquant la localisation actuelle du deuxième dispositif informatique mobile (504) consiste à envoyer le deuxième message de demande à une deuxième application logicielle de téléphonie sur le deuxième dispositif informatique mobile et dans laquelle la première application logicielle de téléphonie sur le premier dispositif informatique mobile et la deuxième application logicielle de téléphonie sur le deuxième dispositif informatique mobile sont fournies par le même fournisseur de services de téléphonie.

6. La méthode de la revendication 1, dans laquelle l'étape consistant à envoyer un deuxième message de demande demandant des données de localisation indiquant la localisation actuelle du deuxième dispositif informatique mobile (504) consiste à envoyer le deuxième message de demande à une application logicielle de téléphonie sur le deuxième dispositif informatique mobile.

7. La méthode de la revendication 1, dans laquelle l'étape consistant à envoyer un deuxième message de demande demandant des données de localisation indiquant la localisation actuelle du deuxième dispositif informatique mobile (504) consiste à envoyer une notification push à une application logicielle de téléphonie sur le deuxième dispositif informatique mobile.

8. La méthode de la revendication 1, dans laquelle les données de localisation indiquant la localisation actuelle du deuxième dispositif informatique mobile reçues depuis le deuxième dispositif informatique mobile comprennent des coordonnées de latitude et de longitude obtenues à partir d'un récepteur GPS du deuxième dispositif informatique mobile et dans laquelle l'étape de conversion (508) consiste à convertir la latitude et la longitude en une adresse postale.

9. La méthode de la revendication 1, dans laquelle les données de localisation indiquant la localisation actuelle du deuxième dispositif informatique mobile reçues depuis le deuxième dispositif informatique mobile comprennent un énoncé en langue ordinaire composé de plusieurs mots indiquant la localisation actuelle du deuxième dispositif informatique mobile.

10. La méthode de la revendication 1, dans laquelle les données de localisation converties dans le deuxième format de données de localisation indiquent la localisation actuelle du premier dispositif informatique mobile qui est envoyée au premier dispositif informatique mobile et comprennent une adresse postale.

11. La méthode de la revendication 1, dans laquelle le deuxième dispositif informatique mobile est identifié comme un deuxième dispositif informatique mobile que l'on sait être détenu par l'utilisateur du premier dispositif informatique mobile.

12. La méthode de la revendication 1, dans laquelle l'étape consistant à générer et à envoyer le deuxième message de demande au deuxième dispositif informatique mobile (504) est effectuée en réponse à la réception du premier message de demande.

13. La méthode de la revendication 1, dans laquelle le serveur envoie le deuxième message de demande au deuxième dispositif informatique mobile en réponse à la réception du premier message de demande reçu depuis le premier dispositif informatique mobile et dans laquelle le premier message de réponse que le serveur reçoit depuis le deuxième dispositif informatique mobile est envoyé par le deuxième dispositif informatique mobile en réponse au deuxième message de demande.
